# EUROPEAN PATENT SPECIFICATION

(11) **EP 2 691 440 B1**
(45) Date of publication and mention of the grant of the patent: **27.05.2015**
(21) Application number: 12711522.8
(22) Date of filing: 19.03.2012
(51) Int. Cl.: C08G 65/00

(54) **METHOD FOR PRODUCING SHORT-CHAIN POLYFUNCTIONAL POLYETHER POLYOLS UTILIZING SUPERACID AND DOUBLE-METAL CYANIDE CATALYSIS**
VERFAHREN ZUR HERSTELLUNG VON KURZKETTIGEN POLYFUNKTIONELLEN POLYETHERPOLYOLEN MIT SUPERSAURER UND DOPPELMETALLCYANID-KATALYSE
PROCÉDÉ DE PRODUCTION DE POLYÉTHER POLYOLS POLYFONCTIONNELS À CHAÎNE COURTE AU MOYEN DE CATALYSES AU SUPERACIDE ET AU CYANURE MÉTALLIQUE DOUBLE

(30) Priority: 31.03.2011 US 201161470003 P
(43) Date of publication of application: 05.02.2014
(73) Proprietor: Dow Global Technologies LLC, Midland, MI 48674 (US)
(72) Inventor: SHUTOV, Pavel, L., NL-4532LH Terneuzen (NL); VAN DER WAL, Hanno, R., NL-4542 BP Hoek (NL); MASY, Jean-Paul, B-9070 Destelbergen (BE); BABB, David, A., Lake Jackson, TX 77566 (US)
(74) Representative: Beck Greener
(86) International application number: PCT/US2012/029601
(87) International publication number: WO 2012/134849

(56) References cited:
- EP-A2- 0 090 445
- WO-A1-99/56874
- WO-A1-03/044074
- WO-A1-2008/094239
- WO-A1-2008/105843
- US-A- 3 929 709
- US-A- 5 008 299
- US-A- 5 721 284
- US-A1- 2008 207 784
- WEGENER G ET AL: "Trends in industrial catalysis in the polyurethane industry", APPLIED CATALYSIS A: GENERAL, ELSEVIER SCIENCE, AMSTERDAM, NL, vol. 221, no. 1-2, 30 November 2001 (2001-11-30), pages 303-335, XP004326652, ISSN: 0926-860X, DOI: 10.1016/S0926-860X(01)00910-3

## Description

### FIELD OF THE INVENTION

This invention relates to a process for the production of short-chain polyether polyols utilizing superacid and double-metal cyanide catalysis.

### BACKGROUND OF THE INVENTION

Polyether polyols are produced by polymerizing an alkylene oxide in the presence of a starter compound. The starter compound has one or more functional groups at which the alkylene oxide can react to begin forming polymer chains. The main functions of the starter compound are to provide molecular weight control and to establish the number of hydroxyl groups that the polyether polyol will have.

Polyether polyols are a key raw material for producing polyurethanes. Short chain polyfunctional polyether polyols are particularly well suited for the production of rigid polyurethane foam and are therefore sometimes referred to as rigid polyether polyols. Polyether polyols for rigid applications use high functionality starter compounds such as sucrose and sorbitol. Rigid polyether polyols typically have hydroxyl equivalent molecular weights (HEW) below 300 Da. Polyether polyols for rigid applications are typically produced by a catalytic addition of propylene oxide onto high functionality starter compounds until the desired molecular weight is achieved. Rigid polyether polyols, extended with propylene oxide, are usually terminated with secondary hydroxyl groups. In addition to rigid polyurethane foam applications, short chain polyfunctional polyether polyols also find utility in the production of coatings, adhesives, sealants, and elastomers (collectively referred to as CASE applications).

Conventional rigid polyether polyols have been produced in semi-batch mode with the use of basic homogeneous catalysts, such as basic salts, hydroxides and alkoxides of Group I and Group II metals of the Periodic Table, aliphatic and aromatic amines. Alkoxylation kinetics of basic catalysis is relatively slow, throughput rates are relatively low, process requires high load of catalyst. As a consequence, most base-catalyzed products require finishing, e.g., removal of the catalyst from the produced polyol. Finishing adds both additional time and cost to producing a short-chain polyfunctional polyether polyol.

Rigid polyol process cycle times are typically long resulting in high cost and low reactor productivity. No continuously fed process exists for production of rigid polyols. Alkoxylation catalyzed by double-metal cyanide (DMC) catalyst has been shown to increase asset capacity. Further, highly active DMC catalysts, used at sufficiently low levels do not require removal, which further reduces cycle times and capital expenses. DMC catalysts have the potential to enable continuously fed short-chain polyol production processes with much higher productivity compared to conventional semi-batch process.

However, the use of a DMC catalyst for the production of rigid polyfunctional polyether polyols has been limited because of increased catalyst sensitivity to low molecular weight strongly coordinating species, particularly in the presence of starter compounds that have two hydroxyl groups in a 1,2- or a 1,3- position. When used with such starter compounds, DMC catalysts are difficult to activate and perform sluggishly. For example, DMC alkoxylation kinetics with high functionality starter compounds is particularly slow in the range of 20-60 Da hydroxyl equivalent weights (HEW). Further, when used with high functionality starter compounds, DMC catalysts tend to deactivate over time, often before the polymerization is completed. To ensure complete polymerization, high levels of catalyst are required. These limitations greatly reduce the practical applicability of DMC catalysts for the production of short-chain polyfunctional polyether polyols.

For example USP 6,482,993 discloses the use of both finishing KOH and non-finishing yttrium triflate catalysis to prepare trimethylol propane oligomeric propoxylates, which are then propoxylated with DMC catalysis to produce flexible polyether polyol triols with HEW more than 1000 Da. USP 7,723,465, WO 1998003571 and WO 1999014258 also describe KOH/DMC catalyzed approach to glycerine based flexible polyether triol polyols by both semi-batch and continuously fed processes. However, these patents only describe products with functionalities 2-3 and HEW outside of rigid range. Additional examples of superacid alkoxylation catalysis are, for instance, monoethoxlylation of n-butanol, see WO 200243861 and WO 2008134390. For examples of metal salt of a superacid catalyzed monoethoxlylation of n-butanol see USP 4,543,430.

Alternatively, superacid catalysts can be used for production of rigid polyether polyols to achieve significantly higher reactor throughput rates and without the need for catalyst removal. However, superacids do not provide regioselective PO polymerization and typically produce approximately equal amounts of primary and secondary OH capped propoxylates. Because of that, rigid polyol propoxylates, produced with superacidic catalysis, are not suitable for current rigid formulations that are based mainly on secondary hydroxyl capped polyols. Reactivity of primary hydroxyls towards isocyanates is, on the average, 3.3 times higher versus that of the secondary hydroxyls. This would result in the need to reformulate the whole formulation or at least to adjust the catalyst package. Another issue with superacidic catalysis is cyclic volatile by-product formation. Volatile impurities formed include significant amounts of toxic and highly odored aldehydes, substituted dioxanes and dioxolanes.

There exists a need for a process to prepare short-chain polyfunctional polyether polyols having an improved (e.g., reduced) cycle time as compared to conventional semi-batch base-catalyzed processes. Further, there is a need for a semi-batch and/or continuously fed process to prepare short chain polyfunctional polyether polyols which does not require a finishing step.

### SUMMARY OF THE INVENTION

The subject-matter of the present invention is soley defined by claims 1-5 as attached hereto.

The present invention accordingly provides such a method for the production of short-chain polyfunctional polyether polyols with improved cycle time comprising the steps of: (i) obtaining at least one oligomeric alkoxylated starter compound by reacting: (i.a) at least one starter compound comprising from 3 to 9 hydroxyl groups wherein said starter compound has a hydroxy equivalent weight (HEW) of from 22 to 90 Da; (i.b) at least one alkylene oxide in the presence of; (i.c) a superacid catalyst in an amount of from 5 to 500 ppm relative to the amount of oligomeric alkoxylated starter compound to be produced; and (i.d) at a reaction temperature of from 60°C to 180°C; wherein the resulting oligomeric alkoxylated starter compound has a HEW of from 60 to 200 Da; and (ii) converting said oligomeric alkoxylated starter compound into a short-chain polyether polyol without removal of the superacid catalyst by reacting: (ii.a) the oligomeric alkoxylated starter compound with; (ii.b) at least one alkylene oxide in the presence of; (ii.c) at least one double-metal cyanide (DMC) catalyst, wherein the concentration of the DMC catalyst is from 10 to 10,000 ppm relative to the amount of short-chain polyether polyol to be produced; and (ii.d) at a reaction temperature of from 90°C to 180°C; wherein the resulting short-chain polyether polyol has a HEW of from 90 to 400 Da.

In a preferred embodiment of the method described herein above, the starter compound is trimethylolpropane, glycerol, polyglycerol, pentaerythritol, erythritol, xylitol, sorbitol, maltitol, sucrose, dextrose, invert sugar, degraded starch, degraded cellulose, hydrogenated starch hydrolysates, an aromatic Mannich polycondensate, or mixtures thereof.

In a preferred embodiment of the method described herein above, the superacid is fluorinated sulfonic acid, a perfluoroalkylsulfonic acid, fluoroantimonic acid (HSbF₆), carborane superacid (HCHB₁₁Cl₁₁), perchloric acid (HClO₄), tetrafluoroboric acid (HBF₄), hexafluorophosphoric acid (HPF₆), boron trifluoride (BF₃), antimony pentafluoride (SbF₅), phosphorous pentafluoride (PF₅), a sulfated metal oxyhydroxyide, a sulfated metal oxysilicate, a superacid metal oxide, a supported Lewis acid, a supported Bronsted acids, a zeolites, a heterogeneous acid catalyst, a perfluorinated ion exchange polymers (PFIEP), or mixtures thereof, more preferably, the superacid is trifluoromethanesulfonic (triflic) acid (CF₃SO₃H), fluorosulfonic acid (HSO₃F), fluoroantimonic acid, Magic acid (FSO₃H-SbF₅), or mixtures thereof.

In a preferred embodiment of the method described herein above, the double-metal cyanide catalysis is represented by the formula:

M_{b}[M¹(CN)ᵣ(X)ₜ]_{c}][M²(X)₆]_{d} • nM³ₓA_{y}

wherein
M and M³ are each metals;
M¹ is a transition metal different from M,
X independently represents a group other than cyanide that coordinates with the
M¹ ion; M² is a transition metal;
A represents an anion;
b, c and d are numbers that reflect an electrostatically neutral complex;
r is from 4 to 6;
t is from 0 to 2;
x and y are integers that balance the charges in the metal salt M³ₓA_{y}; and
n is zero or a positive integer;
more preferably:
M and M³ independently are a metal ion selected from Zn⁺², Fe⁺², Co⁺², Ni⁺²,
Mo⁺⁴, Mo⁺⁶, Al⁺³, V⁺⁴, V⁺⁵, Sr⁺², W⁺⁴, W⁺⁶, Mn⁺², Sn⁺², Sn⁺⁴, Pb⁺², Cu⁺², La⁺³, or Cr⁺³;
M¹ and M² are independently Fe⁺³, Fe⁺², Co⁺³, Co⁺², Cr⁺², Cr⁺³, Mn⁺², Mn⁺³, Ir⁺³, Ni⁺², Rh⁺³, Ru⁺², V⁺⁴, V⁺⁵, Ni²⁺, Pd²⁺, or Pt²⁺;
A is chloride, bromide, iodide, nitrate, sulfate, carbonate, cyanide, oxalate, thiocyanate, isocyanate, perchlorate, isothiocyanate, an alkanesulfonate such as methanesulfonate, an arylenesulfonate such as p-toluenesulfonate, trifluoromethanesulfonate (triflate) or a C₁₋₄ carboxylate;
r is 4, 5 or 6; and
t is 0 or 1.
A particularly preferred double-meteal cyanide catalyst is a zinc hexacyanocobaltate catalyst complexed with t-butanol.

Another embodiment of the present invention is a polyurethane polymer foam prepared from a formulation comprising a short-chain polyether polyol prepared by the method described herein above, preferably a rigid polyurethane insulation foam.

### DETAILED DESCRIPTION OF THE EMBODIMENTS

The primary starting material for the inventive process is a low molecular weight polyfunctional starter compound. Suitable low molecular weight starter compounds have from 3 to 9 hydroxyl groups, preferably 3 to 8 hydroxyl groups and a hydroxy equivalent weight (HEW) of from 22 to 90 Da, preferably 27 to 42 Da. Examples of suitable low molecular weight starter compounds are polyfuntional polyols such as: trimethylolpropane, glycerol, polyglycerol, pentaerythritol, erythritol, xylitol, sorbitol, maltitol, sucrose, dextrose, invert sugar, degraded starch / cellulose, hydrogenated starch hydrolysates or aromatic Mannich polycondensates. The low molecular weight starter compounds may be used individually or as a mixture of two or more.

The second starting material, i.e., the alkoxylation agent which is herein termed the epoxide component, may be selected from epoxide compounds, or combinations of such compounds, that are capable of reacting with a low molecular weight starter compound, to form oligomeric alkoxylated starter compounds. Suitable oligomeric alkoxylated starter compounds for use in the present invention are short chain polyfunctional polyether polyols with functionality in the range from 3 to 9 and hydroxyl equivalent weights in the range from 60 to 200 Da. In certain embodiments the epoxide component is selected from ethylene oxide (EO), propylene oxide (PO), butylene oxide, 1-octene oxide, cyclohexene oxide, styrene oxide, glycidyl ether, and combinations thereof. Higher epoxides, having carbon atoms numbering, for example, from 9 to 16, may be used as well in this reaction.

The first catalyst for the process of the invention to produce an oligomeric alkoxylated starter compound is a superacid catalyst. Superacid catalysts are well known to those skilled in the art, for example, see U.S. Patents 6,989,432 and 5,304,688 which are incorporated by reference herein in their entirety. Methods of measuring superacidity and the definition of a superacid as used herein are provided in the U.S. Pat. 5,304,688. Suitable superacid catalysts include, but are not limited to, fluorinated sulfonic acids, for example Magic acid (FSO₃H-SbF₅) and fluorosulfonic acid (HSO₃F), trifluoromethanesulphonic (triflic) acid (HSO₃CF₃), other perfluoroalkylsulfonic acids, fluoroantimonic acid (HSbF₆), carborane superacid (HCHB₁₁Cl₁₁), perchloric acid (HClO₄), tetrafluoroboric acid (HBF₄), hexafluorophosphoric acid (HPF₆), boron trifluoride (BF₃), antimony pentafluoride (SbF₅), phosphorous pentafluoride (PF₅), a sulfated metal oxyhydroxyide, a sulfated metal oxysilicate, a superacid metal oxide, supported Lewis or Bronsted acids, and various zeolites and heterogeneous acid catalysts, perfluorinated ion exchange polymers (PFIEP), such as the NAFION™ PFIEP products, a family of perfluorinated sulfonic acid polymers (commercially available from E. I. du Pont de Nemours and Company, Wilmington, Del. (hereinafter, DuPont)), or a mixture thereof.

Particularly suitable superacids for use in the present invention are protic superacids. Commercially available protic superacids include trifluoromethanesulfonic acid (CF₃SO₃H), also known as triflic acid, fluorosulfonic acid (FSO₃H), and fluoroantimonic acid, all of which are at least a thousand times stronger than sulfuric acid. The strongest protic superacids are prepared by the combination of two components, a strong Lewis acid and a strong Brønsted acid.

A preferred protic superacid is trifluoromethanesulfonic acid.

The preferred amount of the superacid to be used depends on many factors, including the desired reaction rate, the type and quantity of starter compound used, catalyst type, reaction temperature, and other considerations. Preferably, in the present invention, the superacid is used at catalytic in a range from 5 ppm to 500 ppm, based on the weight of the oligomeric alkoxylated starter compound to be produced. Preferably, the superacid is used at catalytic level below 200 ppm, preferably below 100 ppm, more preferably below 50 ppm, even more preferably below 30 ppm, based on the quantity of the oligomeric alkoxylated starter compound to be produced. Preferably, the superacid is used at catalytic level of from 5 ppm, preferably equal to or greater than 10 ppm, and more preferably equal to or greater than 15 ppm, based on the weight of the oligomeric alkoxylated starter compound. Preferably, the superacid catalyst is used in a catalytic amount of from 15 to 25 ppm, based on the quantity of the oligomeric alkoxylated starter compound to be produced. The level of superacid employed can be affected by the level of basic impurities contained in the starter compound used in the process of the present invention.

The alkoxylation catalyzed by the superacid catalyst proceeds in the temperature range from 60 to 180°C, preferably in the range from 80 to 130°C, particularly preferably from 90 to 100°C, at total pressures of 1 to 7 bar. The process may be performed without solvent or in an inert organic solvent, such as for example toluene or xylene. If the solvent, used in the process is not inert towards any of the components present in the reaction mixture, such as tetrahydrofuran (THF), it may be undesirably co-polymerized and incorporated into polyether polyol growing chains together with the epoxide component. The quantity of solvent is conventionally 10 to 50 wt. %. The reaction is preferably performed without solvent.

The reaction times for the alkoxylation are in the range from a few minutes to several hours.

The hydroxy equivalent weights (HEW) of the oligomeric, alkoxylated starter compounds produced by the superacid catalyst are in the range between 60 to 200 Daltons (Da), preferably in the range between 60 to 90 Da.

The alkoxylation process may be performed continuously, in a batch, or semi-batch process.

The oligomeric alkoxylated starter compounds produced according to the invention may be directly, i.e. without working up and removal of the superacid catalyst, further extended by means of a second catalyst, preferably a double-metal cyanide (DMC) catalyst, to yield short-chain polyether polyols with higher HEW and predominantly secondary hydroxyl functionality; herein, predominantly is defined as greater than 50 percent, preferably greater than 75 percent, and more preferably greater than 90 percent. If desired, highly volatile fractions may first be removed from the oligomeric alkoxylated starter compound by vacuum stripping at elevated temperature. The residual superacid catalyst is preferably deactivated by an addition of equimolar amounts of a suitable base, such as basic metal salts (potassium acetate, potassium carbonate, potassium phosphate, etc.), hydroxides (potassium hydroxide, sodium hydroxide), amines (triethylamine, imidazole), and the like. Double-metal cyanide catalysts are often highly active, have relatively high surface areas, typically within the range of from 50 to 200 square meters per gram (m²/g), and may produce polyether polyols, in particular, that have lower unsaturation when compared with otherwise similar polyols made using basic (potassium hydroxide, KOH) catalysis. The catalysts can be used to make a variety of polymer products, including polyether, polyester, and polyether-ester polyols.

The two alkoxylation stages, e.g., the first stage using a superacid catalyst and the second stage using a DMC catalyst, may be performed separately (temporally and/or spatially, i.e. in different reaction vessels) or sequentially, sometimes referred to as a "one pot multistep reaction".

Suitable double-metal cyanide catalysts include those described, for example, in USP 3,278,457; 3,278,458; 3,278,459; 3,404,109; 3,427,256; 3,427,334; 3,427,335; and 5,470,813, each of which is incorporated herein by reference in its entirety. Some suitable DMC catalysts can be represented by the formula:

M_{b}[M¹(CN)ᵣ(X)ₜ]_{c}[M²(X)₆]_{d} • nM³ₓA_{y}

wherein M and M³ are each metals; M¹ is a transition metal different from M, each X represents a group other than cyanide that coordinates with the M¹ ion; M² is a transition metal; A represents an anion; b, c and d are numbers that reflect an electrostatically neutral complex; r is from 4 to 6; t is from 0 to 2; x and y are integers that balance the charges in the metal salt M³ₓA_{y}, and n is zero or a positive integer.

M and M³ each are preferably a metal ion selected from the group consisting of Zn⁺², Fe⁺², Co⁺², Ni⁺², Mo⁺⁴, Mo⁺⁶, Al⁺³, V⁺⁴, V⁺⁵, Sr⁺², W⁺⁴, W⁺⁶, Mn⁺², Sn⁺², Sn⁺⁴, Pb⁺², Cu⁺², La⁺³ and Cr⁺³, with Zn⁺² being preferred. M¹ and M² are preferably Fe⁺³, Fe⁺², Co⁺³, Co⁺², Cr⁺², Cr⁺³, Mn⁺², Mn⁺³, Ir⁺³, Ni⁺², Rh⁺³, Ru⁺², V⁺⁴, V⁺⁵, Ni²⁺, Pd²⁺, and Pt²⁺. Among the foregoing, those in the plus-three oxidation state are more preferred. Co⁺³ and Fe⁺³ are even more preferred and Co⁺³ is most preferred.

Suitable anions A include halides such as chloride, bromide and iodide, nitrate, sulfate, carbonate, cyanide, oxalate, thiocyanate, isocyanate, perchlorate, isothiocyanate, an alkanesulfonate such as methanesulfonate, an arylenesulfonate such as p-toluenesulfonate, trifluoromethanesulfonate (triflate) and a C₁₋₄ carboxylate. Chloride ion is especially preferred.

r is preferably 4, 5 or 6, preferably 4 or 6, and most preferably 6; t is preferably 0 or 1, most preferably 0.

In most cases, r + t will equal six.

A suitable type of DMC catalyst is a zinc hexacyanocobaltate catalyst complex. An especially preferred type of DMC catalyst is complexed with t-butanol, for example a zinc hexacyanocobaltate catalyst complexed with t-butanol.

The oligomeric, alkoxylated starter compounds having 3 to 9 hydroxyl groups, which have previously been produced from the above-stated low molecular weight starters by means of catalysis by a superacid without removal of the catalyst, and which have HEW of between 60 and 200 Da, may be used individually or as a mixture.

The alkoxylation process, catalyzed by the highly active DMC catalysts, of alkylene oxides onto oligomeric alkoxylated starter compounds containing active hydrogen atoms generally proceeds at temperatures of 80 to 220°C, preferably in the range from 140 to 180°C, particularly preferably at temperatures of 150 to 180°C. The reaction may be performed at total pressures of 0.1 to 7 bar. Alkoxylation may be performed without solvent or in an inert organic solvent, such as for example toluene or xylene. The quantity of solvent is conventionally 10 to 50 wt. % relative to the quantity of the polyether polyol to be produced. The reaction is preferably performed without solvent.

The DMC catalyst concentration is 10,000 ppm or below, preferably 1,000 ppm or below, particularly preferably 200 ppm or below, in each case relative to the quantity of the short-chain polyether polyol to be produced. The DMC catalyst concentration is 10 ppm or greater, preferably 20 ppm or greater, more preferably 50 ppm, in each case relative to the quantity of the short-chain polyether polyol to be produced. Preferably the DMC catalyst range is between 50 to 200 ppm based on the weight of the short-chain polyether polyol to be produced.

At these low catalyst concentrations, it is not necessary to work up the product. For use in polyurethane applications, it is possible to dispense with catalyst removal from the polyol without there being any negative impact on product quality.

The reaction times for the alkoxylation using the DMC catalyst are in the range from one hour to a few days, preferably a few hours.

The HEW of the short-chain polyether polyols produced using the process according to the invention are in the range from 80 to 400 Da, preferably in the range from 90 to 350 Da, particularly preferably in the range from 110 to 300 Da.

Alkoxylation may be performed continuously, in a batch, or semi-batch process.

The highly active DMC catalysts generally require an induction time of a few minutes to several hours. The initial charge of alkylene oxide is introduced into the reactor, the reactor is closed and maintained at reaction conditions until an accelerated drop in the reactor pressure, accompanied by an exotherm, is observed. This accelerated pressure drop is indicative of the activation of the DMC catalyst. No additional alkylene oxide is added to the reactor during the induction period, therefore the productivity of the process and the resulting process cycle time are negatively impacted by this waiting period. Several operating parameters are known to mitigate the risk of poor catalyst activation, and include reduction of water content in the starting mixture, and elimination of residual alkalinity through the addition of acid, typically phosphoric acid.

The use of the oligomeric, alkoxylated polyfunctional starter compounds enables the use of highly active and selective DMC catalysis for the production of short chain polyfunctional polyether polyols in a semi-batch or continuous mode.

The oligomeric alkoxylated starter compounds of the present invention obtained by catalysis with a superacid catalyst desirably contain little to no residual alkalinity because alkalinity could negatively impact DMC catalyst activity. Said oligomeric alkoxylated starter compounds, obtained according to the invention by catalysis with a superacid catalyst, brings about a distinct cycle time reduction (by at least 25%), in comparison with the use of corresponding oligomeric, alkoxylated starter compounds which were produced by alkali metal catalysis and conventional working up (neutralization, filtration, drying, etc.).

Simultaneously, using the oligomeric alkoxylated starter compounds produced by catalysis with the superacid catalyst, allows for the use of the same reactor set up for both superacid and DMC catalytic steps of the process, which is particularly suitable for a semi-batch production process. This may result in reduction of the overall reaction cycle times by at least 50%. In this manner, the shortening of cycle times in short-chain polyether polyol production improves the economic viability of the process.

The short-chain polyether polyol from the process of the present invention may be used for a number of applications, but particularly for preparing polyurethane foams, in particular rigid polyurethane foams. Rigid polyurethane foams comprising the short-chain polyether polyol made by the process of the present invention are useful for rigid polyurethane foam insulation applications such as for insulation for appliances and insulation for construction applications. The short-chain polyether polyol from the process of the present invention may be used alone or in conjunction with one or more component to make coatings; elastomers; sealants, and adhesives.

### EXAMPLES

The following materials are used in Examples 1 to 7 and Comparative Example A:
"Sorbitol" having a purity of greater than (>) 99% available from Aldrich;
"Glycerine" having a purity of greater than (>) 99.5% available from Aldrich;
"VORANOL™ CP450" is a glycerine-initiated oxypropylene triol polyether polyol of about 450 molecular weight, available from The Dow Chemical Company;
"PO" is propylene oxide with a purity > 99.9% available from The Dow Chemical Company;
"TFA" is trifluoromethanesulfonic acid (triflic acid) with a purity > 98% available from Fluka; and
"DMC" is a double-metal cyanide catalyst having the trade name ARCOL™ A3 available from Bayer.

Testing is carried out according to the following methods:
"Hydroxyl Number" is measured as potassium hydroxide (KOH) mg/g, according to protocol of ASTM D4274 D;
"Acid Number" is measured as potassium hydroxide (KOH) mg/g according and determined by potentiometric titration of a methanolic solution of the sample with standard methanolic KOH solution (0.01 N: certified, available from Fisher Scientific).
"Water content" is measured according to ASTM E203;
"Viscosity" is determined at 25°C, 50°C, 75°C and 100°C and is measured according to Cone-Plate: ISO 3219;
"Density at 25°C" is determined according to ASTM D941-88;
"Density at 60°C" is determined according to ASTM D891;
"Total Unsaturation" is measured as meq/g, according to ASTM D4671;
"pH (1 H₂O + 10 MeOH)" is the apparent pH, measured using a standard pH meter after addition of 10 g of sample to 60 mL of a neutralized water-methanol (1 part water +10 parts methanol by weight) solution;
"Molecular Weight Distribution (MWD)" of the samples is determined by means of room temperature gel permeation chromatography (GPC). The GPC system is calibrated against a standard polyol mixture of VORANOL™ CP6001 + VORANOL CP4100 + VORANOL CP2000 + VORANOL CP1000 (triol glycerine based polypropylene polyols having number molecular weight (Mn) = 6000, 4100, 2000, and 1000 Da). Calculation is based on the narrow standard method; and
"¹³C NMR" spectra are recorded on a Bruker DPX-400 device, with the following working frequencies: 400.13 MHz for ¹H and 100.62 MHz for ¹³C. Polyol samples for ¹³C NMR are measured in 10 mm NMR tubes in d₆-acetone. The samples are prepared by mixing of 3 g of polyol and 1 g of solvent. Inverse gated proton decoupled ¹³C-NMR spectra (relaxation time T1=10 seconds, 1024 scans) and DEPT135 spectra are acquired.

### Example 1

686.5 g (3.77 mol) crystalline sorbitol and 0.17 g 85% phosphoric acid are placed into a 5 L stainless steel alkoxylation reactor. Reactor is thermostated at 120°C, vacuum (1 mbar) is applied to the reactor. Once sorbitol inside the reactor has molten, stirring (200 rpm) is switched on, and nitrogen sparge applied from the bottom of the reactor while still having vacuum pump on, such that the total pressure inside the reactor is kept at 10 mbar. Reaction mixture is dried in such conditions for 2 h. Sparge and vacuum are closed, the reactor temperature is decreased to 100°C, reactor is pressurized with 1 bar (100 kPa) of N₂ pressure, opened, and 0.03 g of triflic acid (22 ppm based on the weight of product) added. The reactor is closed; vacuum is applied to the reactor to lower the pressure inside to below 1 mbar. The stirring rate is increased to 400 rpm and PO (657 g, 11.31 mol) is fed to the reactor at the average feed rate of 7.3 g/min over a period of 90 min. Initial reaction rate (4x10⁻⁴ g/ppm/min) is low due to poor solubility of PO in molten sorbitol, but after 30 min reaction becomes exothermic, and at the end of PO feed the reaction rate is measured to be 1.7x10⁻² g/ppm/min. Upon completion of the feed the total pressure in the reactor equilibrates at 0.1 bar (10 kPa) within 15 min. Potassium carbonate (0.01 g, 7.24 x 10⁻⁶ mol or mikromol (mkmol)) added to the product in order to neutralize the remaining triflic acid. The product is stripped in vacuum for 1 h at 120°C. A colorless viscous liquid is obtained.

The produced polyether polyol has the following properties: OH value: 944 mg KOH/g; Acid value: 0.1 mg KOH/g; Total unsaturation: 0.0044 meq/g; Water: 173 ppm; Total volatiles before vacuum stripping 179 ppm, after vacuum stripping 14 ppm; Viscosity at 50°C: 17700 mPa.s; Viscosity at 75°C: 1300 mPa.s; Viscosity at 100°C: 212 mPa.s; Density at 25°C: 1.197 g/cm³; pH: 5.0; ¹³C-NMR: Sorbitol+3.0 PO, Mn=356 Da; Primary OH: 30% of total OH, Secondary OH: 70% of total OH. GPC: Mn=171 g/mol, Mw/Mn=1.23.

### Example 2

701.9 g (1.97 mol) of the polyether polyol from Example 1 and the DMC catalyst (0.247 g, 180 ppm based on the weight of product) are placed into a 5 L stainless steel alkoxylation reactor. The reactor is thermostated at 150°C. Vacuum is applied to the reactor to lower the pressure inside to below 1 mbar, stirring is applied at 400 rpm. PO (686 g, 11.81 mol) is fed to the reactor at the average feed rate of 6.2 g/min over a period of 110 min. Initial reaction rate is measured at 6x10⁻⁵ g/ppm/min, and at the end of PO feed the reaction rate is measured to be 2x10⁻⁴ g/ppm/min. Upon completion of the feed, the total pressure in the reactor equilibrates at 0.2 bar (20 kPa) within 130 min. The product is stripped in vacuum for 1 h at 120°C. A colorless turbid viscous liquid is obtained.

The produced polyether polyol has the following properties: OH value: 480 mg KOH/g; Acid value: 0.09 mg KOH/g; Total unsaturation: 0.0046 meq/g; Water: 350 ppm; Total volatiles 40 ppm; Viscosity at 25°C: 29200 mPa.s; Viscosity at 50°C: 2220 mPa.s; Viscosity at 75°C: 305 mPa.s; Viscosity at 100°C: 81 mPa.s; Density at 25°C: 1.093 g/cm³; pH: 8.9; ¹³C-NMR: Sorbitol+9.0 PO, Mn=705 Da; Primary OH: 22% of total OH, Secondary OH: 78% of total OH. GPC: Mn=410 g/mol, Mw/Mn=1.46.

### Example 3

323.0 g (3.77 mol) crystalline sorbitol and 0.07 g 85% phosphoric acid are placed into a 5 L stainless steel alkoxylation reactor. Reactor is thermostated at 120°C, vacuum (1 mbar) is applied to the reactor. Once sorbitol inside the reactor has molten, stirring (200 rpm) is switched on and a nitrogen sparge is applied from the bottom of the reactor while still having vacuum pump on such that the total pressure inside the reactor is kept at 10 mbar. The reaction mixture is dried in such conditions for 2 h. Sparge and vacuum are closed, the reactor temperature is decreased to 100°C, the reactor is pressurized with 1 bar (100 kPa) of N₂ pressure, opened, and 0.02 g of triflic acid (26 ppm based on the weight of product) is added. The reactor is closed and vacuum is applied to the reactor to lower the pressure inside to below 1 mbar. The stirring rate is increased to 400 rpm and PO (618 g, 10.64 mol) is fed to the reactor at the average feed rate of 7.3 g/min over a period of 85 min. Initial reaction rate (3x10⁻⁴ g/ppm/min) is low due to poor solubility of PO in molten sorbitol, but after 20 min reaction becomes exothermic and at the end of PO feed the reaction rate is measured to be 7x10⁻³ g/ppm/min. Upon completion of the feed, the total pressure in the reactor equilibrates at 0.2 bar (20 kPa) within 15 min. Potassium carbonate (0.01 g, 7.24 mkmol) added to the product in order to neutralize the remaining triflic acid. The product is stripped in vacuum for 1 h at 120°C. A colorless viscous liquid is obtained.

The produced polyether polyol has the following properties: OH value: 634 mg KOH/g; Acid value: 0.05 mg KOH/g; Total unsaturation: 0.0036 meq/g; Water: 420 ppm; Total volatiles before vacuum stripping 649 ppm, after vacuum stripping 70 ppm; Viscosity at 50°C: 3560 mPa.s; Viscosity at 75°C: 402 mPa.s; Viscosity at 100°C: 85 mPa.s; Density at 25°C: 1.127 g/cm³; pH: 6.2; ¹³C-NMR: Sorbitol+6.0 PO, Mn=530 Da; Primary OH: 41% of total OH, Secondary OH: 59% of total OH. GPC: Mn=310 g/mol, Mw/Mn=1.23.

### Example 4

767.4 g (1.45 mol) of the polyether polyol from Example 3 and the DMC catalyst (0.204 g, 185 ppm based on the weight of product) are placed into a 5 L stainless steel alkoxylation reactor. The reactor is thermostated at 160°C. Vacuum is applied to the reactor to lower the pressure inside to below 1 mbar and stirring is applied at 400 rpm. PO (252 g, 4.34 mol) is fed to the reactor at the average feed rate of 10.1 g/min over a period of 25 min. Initial reaction rate is measured at 7x10⁻⁴ g/ppm/min and at the end of PO feed the reaction rate is measured to be 1x10⁻³ g/ppm/min. Upon completion of the feed the total pressure in the reactor equilibrates at 0.25 bar (25 kPa) within 20 min. The product is stripped in vacuum for 1 h at 120°C. A colorless turbid viscous liquid is obtained.

The produced polyether polyol has the following properties: OH value: 474 mg KOH/g; Acid value: 0.07 mg KOH/g; Total unsaturation: 0.0049 meq/g; Water: 150 ppm; Total volatiles 74 ppm; Viscosity at 25°C: 13100 mPa.s; Viscosity at 50°C: 1090 mPa.s; Viscosity at 75°C: 179 mPa.s; Viscosity at 100°C: 62 mPa.s; Density at 25°C: 1.086 g/cm³; pH: 8.7; ¹³C-NMR: Sorbitol+9.0 PO, Mn=705 Da; Primary OH: 32% of total OH, Secondary OH: 68% of total OH. GPC: Mn=500 g/mol, Mw/Mn=1.30.

### Example 5

281.8 g (1.55 mol) crystalline sorbitol and 0.08 g of 85% phosphoric acid are placed into a 5 L stainless steel alkoxylation reactor. The reactor is thermostated at 120°C and vacuum (1 mbar) is applied to the reactor. Once the sorbitol inside the reactor has become molten, the stirring (200 rpm) is switched on and a nitrogen sparge is applied from the bottom of the reactor while still having vacuum pump on, such that the total pressure inside the reactor is kept at 10 mbar. The reaction mixture is dried under such conditions for 2 h. The sparge and vacuum are closed, the reactor is pressurized with 1 bar (100 kPa) of N₂ pressure, opened, and the DMC catalyst (0.097 g, 100 ppm based on the weight of product) is added. The reactor is closed and vacuum is applied to the reactor to lower the pressure inside to below 1 mbar. The reactor temperature is increased to 150°C and the stirring rate is increased to 400 rpm. PO (100 g, 1.72 mol) is fed to the reactor at the average feed rate of 5.0 g/min over a period of 20 min. Initial reaction rate is measured at 1x10⁻⁵ g/ppm/min. After 120 min of digestion, additional PO (40 g, 0.69 mol) is fed at the average feed rate of 4.0 g/min over a period of 10 min. An additional 200 min of digestion time is allowed. PO feed is resumed, 90 g PO (1.55 mol) is fed at an average feed rate 0.8 g/min within 110 min and 17 h of digestion time is allowed. The reaction rate is measured at 2x10⁻⁶ g/ppm/min.

The residual pressure is vented off and the reaction mixture is stripped in vacuum for 1 h. Additional DMC catalyst (0.098 g, 100 ppm based on the weight of product) is added. The reactor is closed and vacuum is applied to the reactor to lower the pressure inside to below 1 mbar. Residual PO (190 g, 3.28 mol) is fed to the reactor at the average feed rate of 1.2 g/min over a period of 160 min. The reaction rate in the beginning of this feed is measured at 5x10⁻⁵ g/ppm/min and at the end of the PO feed the reaction rate is measured to be 1x10⁻⁴ g/ppm/min. Upon completion of the feed the total pressure in the reactor equilibrates at 0.2 bar (20 kPa) within 120 min. The product is stripped in vacuum for 1 h at 120°C. A yellow turbid viscous liquid is obtained.

The produced polyether polyol has the following properties: OH value: 464 mg KOH/g; Acid value: 0.03 mg KOH/g; Total unsaturation: 0.004 meq/g; Water: 70 ppm; Total volatiles 30 ppm; Viscosity at 50°C: 1570 mPa.s; Viscosity at 75°C: 230 mPa.s; Viscosity at 100°C: 61 mPa.s; Density at 25°C: 1.093 g/cm³; pH: 8.9; ¹³C-NMR: Sorbitol+9.0 PO, Mn=705 Da; Primary OH: 10% of total OH, Secondary OH: 90% of total OH. GPC: Mn=480 g/mol, Mw/Mn=1.60.

### Example 6

1500.0 g (16.29 mol) glycerine and 0.10 g of 85% phosphoric acid are placed into a 5 L stainless steel alkoxylation reactor. The reactor is thermostated at 90°C with stirring (200 rpm) and vacuum (1 mbar) is applied to the reactor for 0.5 h. 1.30 g triflic acid solution 10 wt% in ethanol (30 ppm based on the weight of the product) is then added. The reactor is closed and vacuum is applied to the reactor to lower the pressure inside to below 1 mbar. The stirring rate is increased to 300 rpm and PO (2837.0 g, 48.85 mol) is fed to the reactor at average feed rate of 18 g/min over a period of 160 min. Upon completion of the feed, the total pressure in the reactor equilibrates at 0.2 bar (20 kPa) within 15 min. Potassium carbonate (0.07 g, 0.51 mmol) added to the product in order to neutralize the remaining triflic acid. The product is stripped in vacuum for 1 h at 120°C. A colorless viscous liquid is obtained.

The produced polyether polyol has the following properties: OH value: 613 mg KOH/g; Acid value: 0.04 mg KOH/g; Total unsaturation: 0.0024 meq/g; Water: 250 ppm; Total volatiles 125 ppm; Viscosity at 25°C: 556 mPa.s; Viscosity at 50°C: 83 mPa.s; Viscosity at 75°C: 2 mPa.s; Density at 25°C: 1.090 g/cm³; ¹³C-NMR: Glycerine+3.0 PO, Mn=266 Da; Primary OH: 61% of total OH, Secondary OH: 39% of total OH. GPC: Mn=170 g/mol, Mw/Mn=1.23.

### Example 7

838.1 g of VORANOL CP450, 2.04 g DMC catalyst and 0.10 g 85% by weight phosphoric acid solution in water are placed into a 10-liter stainless steel alkoxylation reactor. The reactor contents are then stripped at 160°C in vacuum for 30 min.

The vacuum line is closed and 73 g of PO are added with a flow of 50 g/min. The reactor pressure has reached 1.52 bar (152 kPa) at the end of this feed. Four minutes later a pressure drop in the reactor to 0.3 bar (30 kPa) observed, corresponding to DMC catalyst activation. PO flow is resumed at 4.83 g/min. After a feed of 95 g PO, a feed of the polyol from Example 6 is started with a constant flow rate of 4.11 g/min. With the beginning of this feed, the flow of PO is reduced to 2.14 g/min. 10 h after (1455 g PO in total and 2463 g of the polyol from Example 6 are fed), both PO and Example 6 polyol flows are stopped. During the feed, the reactor pressure remained below 1.25 bar (125 kPa).

The reactor contents are then digested at 160°C for 6 hours, and the product is then cooled down. A colorless viscous liquid is obtained.

The produced polyether polyol has the following properties: OH value: 373 mg KOH/g; Acid value: 0.02 mg KOH/g; Total unsaturation: 0.0034 meq/g; Water: 70 ppm; Total volatiles 104 ppm; Viscosity at 25°C: 289 mPa.s; Viscosity at 50°C: 74 mPa.s; Viscosity at 75°C: 17 mPa.s; Density at 25°C: 1.060 g/cm³; ¹³C-NMR: Glycerine+6.0 PO, Mn=441 Da; Primary OH: 27% of total OH, Secondary OH: 73% of total OH. GPC: Mn=340 g/mol, Mw/Mn=1.23.

### Comparative Example A

Comparative Example A is performed under the same conditions as Example 7. The initial charge to the reactor consists of 830 g of the VORANOL CP450, 2.00 g of the DMC catalyst and 0.10 g of an 85% by weight phosphoric acid solution in water. The reactor contents are stripped at 160°C in vacuum for 30 min.

The vacuum line is closed and 73 g of PO are added with a flow of 50 g/min. The reactor pressure has reached 1.34 bar (134 kPa) at the end of this feed. 19 minutes later a pressure drop in the reactor to 0.3 bar (30 kPa) observed, corresponding to DMC catalyst activation. PO flow is resumed at 4.83 g/min. After a feed of 94 g PO, a feed of glycerine is started with a constant flow rate of 1.42 g/min. 1 hour after (452 g PO in total and 105 g glycerine are fed), pressure in the reactor has reached 3.50 bar (350 kPa) and both PO and glycerine flows were stopped. After 3 hours 15 minutes digestion time at 160°C, pressure dropped only to 2.90 bar (290 kPa). Product was then cooled down, run was aborted due to very poor alkoxylation kinetics.

### Examples 8, 9 and 10 and Comparative Example B

The following materials are used in Examples 8 to 10 and Comparative Example B:
"VORANOL RN 482" is a sorbitol-initiated oxypropylene hexitol polyether polyol, hydroxyl number 482, available from The Dow Chemical Company;
"VORANOL CP1055" is a glycerine-initiated oxypropylene triol polyether polyol of about 1000 molecular weight, available from The Dow Chemical Company;
"VORANOL RA 500" is an ethylenediamine-initiated oxypropylene tetrol polyether polyol with a hydroxyl number of 500, available from The Dow Chemical Company;
"TEGOSTAB™ B 8474" is a silicone-based surfactant, available from Goldschmidt Chemical Company;
"POLYCAT™ 5" is pentamethyldiethylenetriamine catalyst available from Air Products and Chemicals, Inc.;
"DABCO™ TMR30" is tris-2,4,6-dimethylamino methyl phenol, a trimerization catalyst available from Air Products and Chemicals, Inc.;
"DABCO K-2097" is potassium acetate, 33%wt solution in diethylene glycol, available from Air Products and Chemicals, Inc.;
"VORATEC™ SD 100" is a polymeric methane diphenyl diisocyanate with average functionality 2.7 and NCO content of 31%wt, available from The Dow Chemical Company; and
"BA" is a chemical blowing agent 80:20 mixture of cyclopentane and isopentane, available from The Dow Chemical Company.

Foaming procedure and foam properties characterization:
Foam samples are prepared using hand-mixing techniques. The polyols, catalysts, surfactant, and water are premixed according to Table 1 in order to prepare a formulated polyol. The isocyanate index is kept constant at 1.15 for all the foam samples prepared. The foam samples are evaluated for reactivity, flow, density distribution, compressive strength, thermal conductivity and demolding properties.

Properties are determined according to appliance foam evaluation procedure protocol:
Hand-mix reactivity: reactivity is measured during the foam rise which occurs after pouring the isocyanate in a plastic cup (370 ml) containing polyol (both system ingredients are at constant temperature of 20 ± 1°C) and mixing for 3 seconds at 3000 rpm by means of mechanical stirrer.

Reaction times are as follows:
"(t₀)" is time zero which is the time at which the two components are mixed;
"CT" is cream time which is the time when the foam starts rising from the liquid phase; at this point the liquid mixture become clearer due to bubble formation;
"GT" is gel time which is the time at which the foam mixture has developed enough internal strength to be dimensionally stable; it is recorded when the foam forms strings sticking to a metal spatula put and then withdrawn from the foam; and
"TFT" is tack free-time which is the time at which the skin of the foam does not stick anymore to a glove covered finger when the foam is touched gently.
"FRD" is Free Rise Density and is determined using a free rise foam poured into a polyethylene bag placed in a wooden box. The reaction times (CT, GT, TFT) are determined. The foam should reach a height of about 25 to 30 cm. A foam sample is cut after 24 hours in a regular form, sample weight and volume are measure to calculate density.

Foam physical properties are evaluated using plate mold (30 x 20 x 5 cm) filled at a 45° angle and immediately raised to the vertical position. The mold is maintained at a temperature of 35 ± 1°C for a demold time of 7 minutes. The measured physical properties are the following:
"Thermal conductivity (Lambda)" measurements are carried out with LaserComp Fox 200 equipment at an average temperature of 10°C, according to ISO 8301. 20 x 20 x 2.5 cm samples are cut from plate mold panel, and then undertaken to thermal conductivity measurement;
"CS" is compressive strength, triplicate samples are measured according to ISO 844 on 3-5 cubic specimens cut along the mold panel with skin (skin CS) or without skin (tridimensional CS); and
"Skin curing performance" is determined on a plate mold panel which is demolded after 7 minutes. The percentage of the surface area remaining intact and not sticking to the mold is visually estimated and recorded as cured PU skin; the estimation is made on the two mold larger walls as percentage of total surface area (30 x 20 cm²).

Rigid polyurethane foams are prepared using the components and proportions shown in Table 1.

**Table 1**

| Example | B | 8 | 9 | 10 |
|---|---|---|---|---|
| Comparative Example | | | | |
| COMPOSITION | | | | |
| VORANOL RN 482 | 62.9 | | | |
| Example 5 | | 62.9 | | |
| Example 4 | | | 62.9 | |
| Example 2 | | | | 62.9 |
| VORANOL CP 1055 | 25 | 25 | 25 | 25 |
| VORANOL RA 500 | 5 | 5 | 5 | 5 |
| TEGOSTAB B8474 | 2.5 | 2.5 | 2.5 | 2.5 |
| POLYCAT 5 | 1.3 | 1.3 | 1.3 | 1.3 |
| DABCO K-2097 | 0.1 | 0.1 | 0.1 | 0.1 |
| DABCO TMR-30 | 0.7 | 0.7 | 0.7 | 0.7 |
| Water | 2.5 | 2.5 | 2.5 | 2.5 |
| VORATEC SD 100 | 146 | 146 | 146 | 146 |
| BA | 14.5 | 14.5 | 14.5 | 14.5 |

The formulated polyol, used for preparation of the foam from comparative example B contained 62.9 parts by weight (pbw) of commercial VORANOL RN482 polyether polyol. The formulated polyols, used for preparation of the foams from examples 8, 9, and 10 contained instead the same amount of the experimental polyether polyols prepared as described in Example 5, 4 and 2.

The properties for the resulting foams are shown in Table 2.

**Table 2**

| Example | | | 8 | 9 | 10 |
|---|---|---|---|---|---|
| Comparative Example | | B | | | |
| Reactivity T, 23 °C for 3s @ 3000 RPM | | | | | |
| FRD 24h | kg/m³ | 24.3 | 25.4 | 24.5 | 24.6 |
| CT | sec | 4-5 | 5 | 5 | 4-5 |
| GT | sec | 60 | 61 | 45 | 53 |
| TFT | sec | 90 | 90 | 72 | 81 |
| Plaque Characterization with a demold time of 7 min, T=35 °C | | | | | |
| Foam density | kg/m³ | 41.0 | 39.0 | 41.6 | 44.0 |
| Skin curing performance | % | 19 | 15 | 100 | 100 |
| Lambda @ 10°C | mW/m*k | 21.17 | 21.51 | 21.21 | 21.59 |
| CS 1 | kPa | 171 | 146 | 162.3 | 185 |
| CS 2 | kPa | 175 | 144 | 161 | 194 |
| CS 3 | kPa | 181 | 146 | 168 | 193 |
| average CS | kPa | 175.7 | 145.3 | 163.8 | 190.7 |
| average CS std dev | kPa | 5.0 | 1.2 | 3.7 | 4.9 |
| Density with skin | kg/m³ | 38.6 | 36.1 | 38.7 | 40.8 |
| Skin CS corrected to d = 32 kg/m³ | kPa | 128 | 118 | 118 | 127 |

Example 8 as compared to Comparative Example B demonstrates a similar reactivity profile, similar skin curing performance, worse CS performance, and Lambda in line (hand mix).

Example 9 as compared to Comparative Example B demonstrates much faster reactivity profile, better skin curing performance, worse CS performance, and Lambda in line (hand mix).

Example 10 as compared to Comparative Example B demonstrates faster reactivity profile, better skin curing performance, better CS performance, and Lambda in line (hand mix).

## Claims

1. A method for producing a short-chain polyether polyol comprising the steps of:
(i) obtaining at least one oligomeric alkoxylated starter compound by reacting:
(i.a) at least one low molecular weight starter compound comprising from 3 to 9 hydroxyl groups wherein said starter compound has a hydroxy equivalent weight (HEW) of from 22 to 90 Da;
(i.b) at least one alkylene oxide in the presence of;
(i.c) a superacid catalyst present in a concentration of from 5 to 500 ppm relative to the amount of oligomeric alkoxylated starter compound to be produced; and
(i.d) at a reaction temperature of from 60°C to 180°C;
wherein the oligomeric alkoxylated starter compound has a HEW of from 60 to 200 Da;
and
(ii) converting the resulting alkoxylated starter compound into a short-chain polyether polyol without removal of the superacid catalyst by reacting:
(ii.a) said oligomeric alkoxylated starter compound with;
(ii.b) at least one alkylene oxide in the presence of;
(ii.c) at least one double-metal cyanide (DMC) catalyst, wherein the concentration of the DMC catalyst is from 10 to 10,000 ppm relative to the amount of short-chain polyether polyol to be produced; and
(ii.d) at a reaction temperature of from 90°C to 180°C;
wherein the resulting short-chain polyether polyol has a HEW of from 90 to 400 Da; and
wherein the superacid is fluorinated sulfonic acid, a perfluoroalkylsulfonic acid, fluoroantimonic acid (HSbF₆), carborane superacid (HCHB₁₁Cl₁₁), perchloric acid (HClO₄), tetrafluoroboric acid (HBF₄), hexafluorophosphoric acid (HPF₆), boron trifluoride (BF₃), antimony pentafluoride (SbF₅), phosphorous pentafluoride (PF₅), or mixtures thereof;
or
wherein the superacid is trifluoromethanesulfonic (triflic) acid (CF₃SO₃H), fluorosulfonic acid (HSO₃F), fluoroantimonic acid, Magic acid (FSO₃H-SbF₅), or mixtures thereof.

2. The method of Claim 1 wherein the starter compound is trimethylolpropane, glycerol, polyglycerol, pentaerythritol, erythritol, xylitol, sorbitol, maltitol, sucrose, dextrose, invert sugar, degraded starch, degraded cellulose, hydrogenated starch hydrolysates, an aromatic Mannich polycondensate, or mixtures thereof.

3. The method of Claim 1 wherein the double-metal cyanide catalysis is represented by the formula:
M_{b}[M¹(CN)ᵣ(X)ₜ]_{c}[M²(X)₆]_{d} • nM³ₓA_{y}
wherein
M and M³ are each metals;
M¹ is a transition metal different from M,
X independently represents a group other than cyanide that coordinates with the M¹ ion; M² is a transition metal;
A represents an anion;
b, c and d are numbers that reflect an electrostatically neutral complex;
r is from 4 to 6;
t is from 0 to 2;
x and y are integers that balance the charges in the metal salt M³ₓA_{y}; and
n is zero or a positive integer.

4. The method of Claim 3 wherein:
M and M³ independently are a metal ion selected from Zn⁺², Fe⁺², Co⁺², Ni⁺², Mo⁺⁴, Mo⁺⁶, Al⁺³, V⁺⁴, V⁺⁵, Sr⁺², W⁺⁴, W⁺⁶, Mn⁺², Sn⁺², Sn⁺⁴, Pb⁺², Cu⁺², La⁺³, or Cr⁺³;
M¹ and M² are independently Fe⁺³, Fe⁺², Co⁺³, Co⁺², Cr⁺², Cr⁺³, Mn⁺², Mn⁺³, Ir⁺³, Ni⁺², Rh⁺³, Ru⁺², V⁺⁴, V⁺⁵, Ni²⁺, Pd²⁺, or Pt²⁺;
A is chloride, bromide, iodide, nitrate, sulfate, carbonate, cyanide, oxalate, thiocyanate, isocyanate, perchlorate, isothiocyanate, an alkanesulfonate such as methanesulfonate, an arylenesulfonate such as p-toluenesulfonate, trifluoromethanesulfonate (triflate) or a C₁₋₄ carboxylate;
r is 4, 5 or 6; and
t is 0 or 1.

5. The method of Claim 1 wherein the double-metal cyanide catalyst is a zinc hexacyanocobaltate catalyst complexed with t-butanol.

## Patentansprüche

1. Ein Verfahren zum Herstellen eines kurzkettigen Polyetherpolyols, das die folgenden Schritte beinhaltet:
(i) Erhalten mindestens einer oligomeren alkoxylierten Starterverbindung durch Reagierenlassen von Folgendem:
(i.a) mindestens einer niedermolekularen Starterverbindung, beinhaltend von 3 bis 9 Hydroxylgruppen, wobei die Starterverbindung ein Hydroxyäquivalentgewicht (HEW) von 22 bis 90 Da aufweist;
(i.b) mindestens einem Alkylenoxid in Gegenwart von:
(i.c) einem supersauren Katalysator, der in einer Konzentration von 5 bis 500 ppm relativ zu der Menge an herzustellender oligomerer alkoxylierter Starterverbindung vorliegt; und
(i.d) bei einer Reaktionstemperatur von 60 °C bis 180 °C;
wobei die oligomere alkoxylierte Starterverbindung ein HEW von 60 bis 200 Da aufweist;
und
(ii) Umwandeln der resultierenden alkoxylierten Starterverbindung in ein kurzkettiges Polyetherpolyol ohne Entfernung des supersauren Katalysators durch Reagierenlassen von Folgendem:
(ii.a) der oligomeren alkoxylierten Starterverbindung mit:
(ii.b) mindestens einem Alkylenoxid in Gegenwart von:
(ii.c) mindestens einem Doppelmetallcyanid(DMC)-Katalysator, wobei die Konzentration des DMC-Katalysators von 10 bis 10 000 ppm relativ zu der Menge an herzustellendem kurzkettigem Polyetherpolyol beträgt; und
(ii.d) bei einer Reaktionstemperatur von 90 °C bis 180 °C;
wobei das resultierende kurzkettige Polyetherpolyol ein HEW von 90 bis 400 Da aufweist;
und
wobei die Supersäure fluorierte Sulfonsäure, eine Perfluoralkylsulfonsäure, Fluor-Antimonsäure (HSbF₆), Carboransupersäure (HCHB₁₁Cl₁₁), Perchlorsäure (HClO₄), Tetrafluorborsäure (HBF₄), Hexafluorphosphorsäure (HPF₆), Bortrifluorid (BF₃), Antimonpentafluorid (SbF₅), Phosphorpentafluorid (PF₅) oder Mischungen davon ist; oder
wobei die Supersäure Trifluormethansulfonsäure (Triflatsäure) (CF₃SO₃H), Fluorsulfonsäure (HSO₃F), Fluor-Antimonsäure, magische Säure (FSO₃H-SbF₅) oder Mischungen davon ist.

2. Verfahren gemäß Anspruch 1, wobei die Starterverbindung Trimethylolpropan, Glycerin, Polyglycerin, Pentaerythritol, Erythritol, Xylitol, Sorbitol, Maltit, Saccharose, Dextrose, Invertzucker, abgebaute Stärke, abgebaute Cellulose, hydrierte Stärkehydrolysate, ein aromatisches Mannich-Polykondensat oder Mischungen davon ist.

3. Verfahren gemäß Anspruch 1, wobei die Doppelmetallcyanidkatalyse durch die folgende Formel dargestellt ist:
M_{b}[M¹(CN)ᵣ(X)ₜ]_{c}[M²(X)₆]_{d} • nM³ₓA_{y}
wobei
M und M³ jeweils Metalle sind;
M¹ ein Übergangsmetall, das sich von M unterscheidet, ist,
X unabhängig eine andere Gruppe als Cyanid darstellt, die sich an ein M¹-Ion koordinativ anlagert; M² ein Übergangsmetall ist;
A ein Anion darstellt;
b, c und d Zahlen sind, die einen elektrostatisch neutralen Komplex widerspiegeln;
r von 4 bis 6 beträgt;
t von 0 bis 2 beträgt;
x und y ganze Zahlen sind, die die Ladungen in dem Metallsalz M³ₓA_{y} ausgleichen; und
n null oder eine positive ganze Zahl ist.

4. Verfahren gemäß Anspruch 3, wobei:
M und M³ unabhängig ein Metallion sind, ausgewählt aus Zn⁺², Fe⁺², Co⁺², Ni⁺², Mo⁺⁴, Mo⁺⁶, Al⁺³, V⁺⁴, V⁺⁵, Sr⁺², W⁺⁴, W⁺⁶, Mn⁺², Sn⁺², Sn⁺⁴, Pb⁺², Cu⁺², La⁺³ oder Cr⁺³;
M¹ und M² unabhängig Fe⁺³, Fe⁺², Co⁺³, Co⁺², Cr⁺², Cr⁺³, Mn⁺², Mn⁺³, Ir⁺³, Ni⁺², Rh⁺³, Ru⁺², V⁺⁴, V⁺⁵, Ni²⁺, Pd²⁺ oder Pt²⁺ sind;
A Chlorid, Bromid, Iodid, Nitrat, Sulfat, Carbonat, Cyanid, Oxalat, Thiocyanat, Isocyanat, Perchlorat, Isothiocyanat, ein Alkansulfonat wie etwa Methansulfonat, ein Arlyensulfonat wie etwa p-Toluensulfonat, Trifluormethansulfonat (Triflat) oder ein C₁₋₄-Carboxylat ist;
r 4, 5 oder 6 ist; und
t 0 oder 1 ist.

5. Verfahren gemäß Anspruch 1, wobei der Doppelmetallcyanidkatalysator ein Zinkhexacyanocobaltatkatalysator, komplexiert mit t-Butanol, ist.

## Revendications

1. Une méthode pour produire un polyéther polyol à chaîne courte comprenant les étapes consistant :
(i) à obtenir au moins un composé initiateur alcoxylé oligomère en faisant réagir :
(i.a) au moins un composé initiateur de faible masse moléculaire comprenant de 3 à 9 groupes hydroxyle, ledit composé initiateur ayant un poids équivalent d'hydroxy (HEW) allant de 22 à 90 Da ;
(i.b) au moins un oxyde d'alkylène en présence de :
(i.c) un catalyseur au superacide présent dans une concentration allant de 5 à 500 ppm par rapport à la quantité de composé initiateur alcoxylé oligomère à produire ; et
(i.d) à une température de réaction allant de 60 °C à 180 °C ;
dans laquelle le composé initiateur alcoxylé oligomère a un HEW allant de 60 à 200 Da ; et
(ii) à convertir le composé initiateur alcoxylé résultant en un polyéther polyol à chaîne courte sans élimination du catalyseur au superacide en faisant réagir :
(ii.a) ledit composé initiateur alcoxylé oligomère avec :
(ii.b) au moins un oxyde d'alkylène en présence de :
(ii.c) au moins un catalyseur au cyanure bimétallique (DMC), la concentration du catalyseur DMC allant de 10 à 10 000 ppm par rapport à la quantité de polyéther polyol à chaîne courte à produire ; et
(ii.d) à une température de réaction allant de 90 °C à 180 °C ;
dans laquelle le polyéther polyol à chaîne courte résultant a un HEW allant de 90 à 400 Da ;
et
dans laquelle le superacide est l'acide sulfonique fluoré, un acide perfluoroalkylsulfonique, l'acide fluoroantimonique (HSbF₆), le superacide carborane (HCHB₁₁Cl₁₁), l'acide perchlorique (HClO₄), l'acide tétrafluoroborique (HBF₄), l'acide hexafluorophosphorique (HPF₆), le trifluorure de bore (BF₃), le pentafluorure d'antimoine (SbF₅), le pentafluorure de phosphore (PF₅), ou des mélanges de ceux-ci ;
ou
dans laquelle le superacide est l'acide trifluorométhane sulfonique (triflique) (CF₃SO₃H), l'acide fluorosulfonique (HSO₃F), l'acide fluoroantimonique, l'acide magique (FSO₃H-SbF₅), ou des mélanges de ceux-ci.

2. La méthode de la revendication 1 dans laquelle le composé initiateur est le triméthylolpropane, le glycérol, le polyglycérol, le pentaérythritol, l'érythritol, le xylitol, le sorbitol, le maltitol, le saccharose, le dextrose, le sucre inverti, l'amidon dégradé, la cellulose dégradée, des hydrolysats d'amidon hydrogénés, un polycondensat de Mannich aromatique, ou des mélanges de ceux-ci.

3. La méthode de la revendication 1 dans laquelle la catalyse au cyanure bimétallique est représentée par la formule :
M_{b}[M¹(CN)ᵣ(X)ₜ]_{c}[M²(X)₆]_{d} • nM³ₓA_{y}
dans laquelle
M et M³ sont chacun des métaux ;
M¹ est un métal de transition différent de M,
X représente indépendamment un groupe autre que le cyanure qui se coordonne avec l'ion M¹ ; M² est un métal de transition ;
A représente un anion ;
b, c et d sont des nombres qui reflètent un complexe électrostatiquement neutre ; r va de 4 à 6 ;
t va de 0 à 2 ;
x et y sont des entiers qui équilibrent les charges dans le sel métallique M³ₓA_{y} ; et
n est zéro ou un entier positif.

4. La méthode de la revendication 3 dans laquelle :
M et M³ sont indépendamment un ion métallique sélectionné parmi Zn⁺², Fe⁺², Co⁺², Ni⁺², Mo⁺⁴, Mo⁺⁶, Al⁺³, V⁺⁴, V⁺⁵, Sr⁺², W⁺⁴, W⁺⁶, Mn⁺², Sn⁺², Sn⁺⁴, Pb⁺², Cu⁺², La⁺³, ou Cr⁺3 ;
M¹ et M² sont indépendamment Fe⁺³, Fe⁺², Co⁺³, Co⁺², Cr⁺², Cr⁺³, Mn⁺², Mn⁺³, Ir⁺³, Ni⁺², Rh⁺³, Ru⁺², V⁺⁴, V⁺⁵, Ni²⁺, Pd²⁺, ou Pt²⁺ ;
A est le chlorure, le bromure, l'iodure, le nitrate, le sulfate, le carbonate, le cyanure, l'oxalate, le thiocyanate, l'isocyanate, le perchlorate, l'isothiocyanate, un alcane sulfonate tel qu'un méthane sulfonate, un arylène sulfonate tel que le p-toluène sulfonate, le trifluorométhane sulfonate (triflate) ou un carboxylate en C₁ à C₄ ;
r est 4, 5 ou 6 ; et
t est 0 ou 1.

5. La méthode de la revendication 1 dans laquelle le catalyseur au cyanure bimétallique est un catalyseur à l'hexacyanocobaltate de zinc complexé avec du t-butanol.
